Europäisches Patentamt

European Patent Office

Office européen des brevets

(11) Veröffentlichungsnummer: **0 259 765**
**B1**

(12) # EUROPÄISCHE PATENTSCHRIFT

(45) Veröffentlichungstag der Patentschrift:
**22.11.90**

(51) Int. Cl.⁵: **F16L 5/02, E04H 7/18**

(21) Anmeldenummer: **87112767.6**

(22) Anmeldetag: **02.09.87**

(54) **Vorgefertigtes Bauteil aus Beton oder Stahlbeton.**

(30) Priorität: **11.09.86  DE 3630897**

(43) Veröffentlichungstag der Anmeldung:
**16.03.88 Patentblatt 88/11**

(45) Bekanntmachung des Hinweises auf die Patenterteilung:
**22.11.90 Patentblatt 90/47**

(84) Benannte Vertragsstaaten:
**AT BE CH GB IT LI LU NL**

(56) Entgegenhaltungen:
**DE-U- 7 707 679**
**GB-A- 2 080 467**

**"Elemente des Apparatebaues", Hubert Titze, Springer Verlag, 1963, Seite 147**

(73) Patentinhaber: **Dyckerhoff & Widmann Aktiengesellschaft, Erdinger Landstrasse 1, D-8000 München 81(DE)**

(72) Die Erfinder haben auf ihre Nennung verzichtet

(74) Vertreter: **Patentanwälte Dipl.-Ing. F.W. Möll Dipl.-Ing. H.Ch. Bitterich, Langstrasse 5 Postfach 2080, D-6740 Landau/Pfalz(DE)**

**Beschreibung**

Die Erfindung betrifft ein vorgefertigtes behälterförmiges oder zur Bildung eines Behälters dienendes Bauteil aus Beton oder Stahlbeton mit mindestens einer Öffnung in einer Außenwand, durch die ein Rohr dichtend hindurchführbar ist, und mit einer Dichtung aus einem zwischen einer Oberfläche der Wand und einem losen Flansch zusammendrückbar angeordneten, im Einbauzustand am Rohr anliegenden Dichtring aus einem elastischen Material, wie Gummi, Kunststoff oder dergleichen.

Unter Behältern dieser Art werden vor allem Leichtflüssigkeitsabscheider, Schlammfänge, Kleinkläranlagen oder dergleichen verstanden, also Baukörper, die meist in einem Stück als Stahlbeton-Fertigbauteile hergestellt und in den Erdboden abgesenkt oder, bei größeren Abmessungen, an Ort und Stelle aus einzelnen vorgefertigten Bauteilen zusammengesetzt werden. Derartige Behälter weisen Zu- und Abläufe sowie Verbindungsleitungen aus Rohren auf, die, wenn sie Außenwände durchbrechen, dichtend durch diese hindurchgeführt werden müssen, damit umweltschädigende Stoffe am Austritt in den Erdboden gehindert werden. Da die Anschlüsse dieser Rohrleitungen erst an der Verwendungsstelle hergestellt werden, ist es oft notwendig, einen gewissen Toleranzausgleich zu ermöglichen; außerdem müssen diese Rohrdurchführungen beweglich, und zwar sowohl längen-, als auch winkelveränderlich, dabei trotzdem nicht nur wasserdicht, sondern auch dicht gegen leichtflüssige Kohlenwasserstoffe sein.

Es ist bekannt, zur Bildung einer solchen Mauerdurchführung in die Schalungsform, in der das betreffende Bauteil hergestellt wird, ein rohrförmiges stählernes Einbauteil einzulegen, das die Wandöffnung auskleidet und an beiden Außenseiten der Wand mit einem Flansch anliegt (DE-U 7 707 679). Auf einer Seite, meist der Wandaußenseite, wird auf diesen Flansch ein Dichtring aufgelegt und durch einen von außen aufgelegten losen Flansch unter Zusammendrücken verformt, wobei er sich auch gegen die Rohrwandung anlegt. Abgesehen davon, daß auch durch konische Abschrägung der an dem losen Flansch gebildeten Dichtfläche nicht sichergestellt werden kann, daß sich dieser Dichtring unter der durch den losen Flansch aufgebrachten Axialkraft nur radial nach innen zur Rohrwandung hin verformt und nicht auch radial nach _außen ausweicht, besteht der grundlegende Nachteil solcher Einbauteile darin, daß sich zwischen dem Beton und dem Einbauteil eine Fuge bilden kann, durch die Flüssigkeit unter Umgehung der Dichtung nach außen gelangt. Dies kann auch durch einen zusätzlichen inneren Mauerflansch zwischen den beiden Außenflanschen nicht zuverlässig verhindert werden. Außerdem bildet dieses Einbauteil für die Rohrdurchführung einen zusätzlichen Kostenfaktor.

Eine konische Abschrägung von Dichtflächen zur Steuerung der Verformung eines Dichtringes ist auch bei einfachen Stopfbüchsdichtungen bekannt, wie sie z.B. in Hubert Titze «Elemente des Apparatebaues», Springer-Verlag, 1963, S. 147 beschrieben sind.

Vor diesem Hintergrund liegt der Erfindung die Aufgabe zugrunde, bei einem Bauteil der eingangs angegebenen Art eine Möglichkeit anzugeben, um eine Rohrdurchführung dieser Art mit geringerem Aufwand dicht herzustellen und zu erhalten.

Nach der Erfindung wird diese Aufgabe dadurch gelöst, daß in der Wandoberfläche eine die Wandöffnung umgebende und zu dieser hin geöffnete Ausnehmung zur teilweisen Aufnahme des Dichtrings vorgesehen ist, deren Kontur der Kontur des Dichtringes im Bereich seiner Aufnahme entspricht.

Der Dichtring weist zweckmäßig kreisförmigen Querschnitt auf, während die Tiefe der etwa kreissektorförmigen Ausnehmung größer ist als dessen Radius, aber kleiner als dessen Durchmesser.

Wesentliches Merkmal der Erfindung ist, daß im Bereich der Mauerdurchführung auf Einbauteile verzichtet und die Dichtung unmittelbar zwischen dem Dichtring und der Oberfläche des Betonbauteils hergestellt wird. Daraus resultiert nicht nur der Vorteil, daß Einbauteile eingespart werden, sondern wird auch vermieden, daß sich Flüssigkeit zwischen dem Einbauteil und dem Betonbauteil einen Weg durch die Wand bahnen könnte.

Ein weiterer Vorteil folgt aus der Anordnung und der besonderen Formgebung der die Maueröffnung umgebenden und zur Aufnahme des Dichtrings bestimmten Ausnehmung. Durch die Anordnung dieser Ausnehmung, vor allem aber auch durch deren dem Querschnitt des Dichtrings angepaßte Kontur erfährt dieser ein Widerlager gegen eine Verformung in radialer Richtung nach außen, so daß die beim Zusammendrücken des Dichtrings in axialer Richtung wirksam werdende Verformungskraft in vollem Umfang radial nach innen gegen den Rohrumfang wirksam wird. Die einzigen bei der erfindungsgemäßen Rohrdurchführung erforderlichen Einbauteile sind Gewindehülsen zur Aufnahme der zum Heranführen des losen Flansches an die Wandaußenfläche des Bauteils erforderlichen Schrauben. Die Gewindehülsen durchdringen aber die Wand des Bauteils nicht.

Die Erfindung läßt sich mit gleichen Vorteilen auch dann einsetzen, wenn ein Toleranzausgleich erforderlich ist. Hierbei wird bei einer Wandöffnung, die beträchtlich größer ist .als der Außendurchmesser des hindurchzuführenden Rohres ein Zwischenring verwendet, der in radialer Richtung gegenüber der Wandöffnung verstellbar ist und ähnlich wie der lose Flansch gegen einen in eine Ausnehmung am Bauteil angeordneten Dichtring andrückbar ist und der seinerseits eine entsprechende Ausnehmung aufweist, in die wiederum ein gegen die Rohrwand wirkender Dichtring einlegbar und durch einen losen Flansch in axialer Richtung zusammendrückbar ist.

Die Wandöffnung selbst ist zweckmäßig von der Ausnehmung an sich konisch erweiternd ausgebildet.

Die Erfindung wird nachstehend anhand der in der Zeichnung dargestellten Ausführungsbeispiele näher erläutert. Es zeigt

Fig. 1 einen Horizontalschnitt durch eine nach der Erfindung ausgebildete Durchführung eines Rohres durch eine gekrümmte Behälterwand, teils im Schnitt, teils in Ansicht,

Fig. 2 ein Detail aus Fig. 1 in größerem Maßstab und

Fig. 3 eine Rohrdurchführung mit einem Zwischenring.

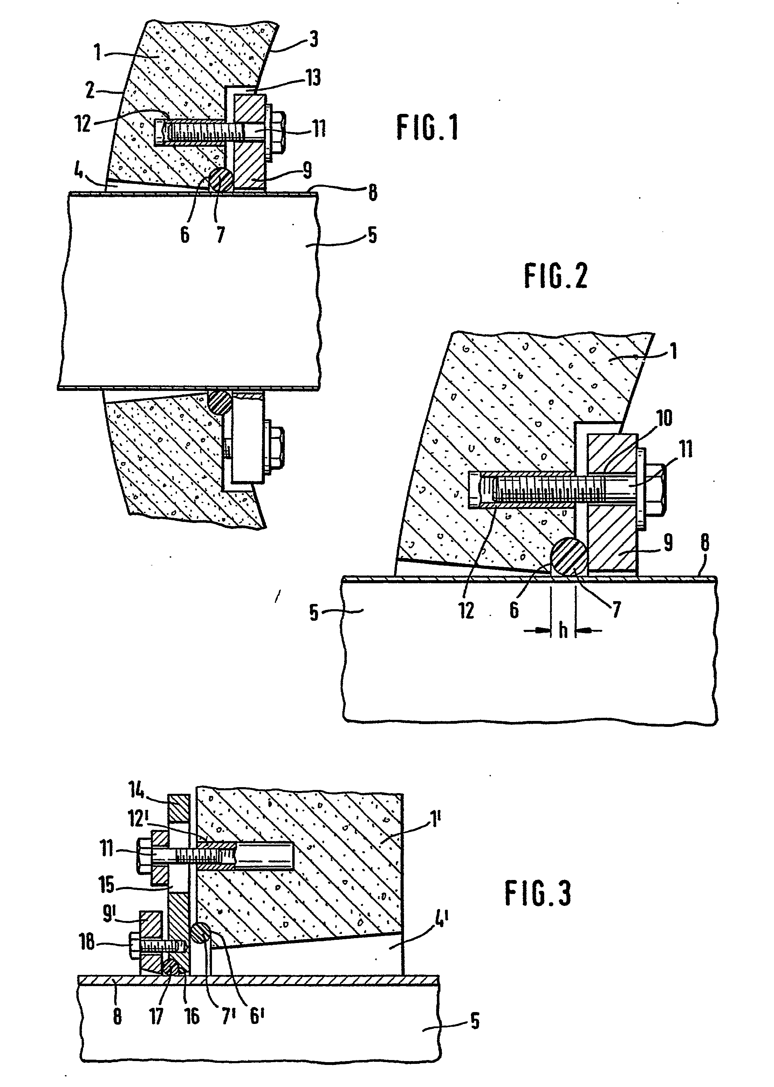

In Fig. 1 ist in einem Horizontalschnitt eine kreisbogenförmig gekrümmte Wand 1 eines Behälters mit einer äußeren Wandfläche 2 und einer inneren Wandfläche 3 dargestellt. In der Wand ist eine Öffnung 4 für die Durchführung eines Rohres 5 vorgesehen, deren Wandung sich von der Innenfläche 3 zur Außenfläche 2 hin konisch erweitert.

Im Bereich der Innenfläche 3 der Wand 1 ist eine die Wandöffnung 4 ringförmig umgebende und zu dieser hin geöffnete Ausnehmung 6 vorgesehen, deren Querschnitt etwa demjenigen eines Viertelkreissektors entspricht und in die ein Dichtring 7 mit kreisförmigem Querschnitt eingelegt ist. Der Dichtring 7 liegt im Einbauzustand - wie dargestellt - an der Außenfläche 8 des Rohres 5 an.

Auf den Dichtring wird in axialer Richtung ein loser Flansch 9 aufgesetzt, dessen Öffnung das Rohr 5 mit geringem Spiel umgibt. Der lose Flansch 9 weist Bohrungen 10 auf, durch die Schraubenbolzen 11 hindurchgesteckt werden können, welche in Gewindehülsen 12 einschraubbar sind, die in die Wand 1 des Bauteils einbetoniert sind. Durch Anziehen der Schraubenbolzen 11 wird der lose Flansch 9 gegen den Dichtring 7 gedrückt, wobei letzterer sich verformt.

Wie vor allem aus Fig. 2 erkennbar ist, ist die Tiefe h der Ausnehmung 6 etwas größer als der Radius des Dichtrings 7, während die Kontur der Ausnehmung 6 derjenigen des Dichtrings 7 entspricht. Dadurch wird der Dichtring 7 nicht nur am Grunde der Ausnehmung 6 in axialer Richtung gehalten, sondern er findet auch in radialer Richtung nach außen ein Widerlager, so daß er sich infolge des beim Anziehen der Schraubenbolzen 11 entstehenden axialen Drucks nur nach innen verformen kann und einen entsprechend hohen Druck auf die Außenfläche 8 des Rohres 5 ausübt.

Wegen der bei dem Ausführungsbeispiel der Fig. 1 und 2 kreisförmig gekrümmten Wand 1 liegt der lose Flansch 9 selbst in einer Ausnehmung 13, um eine ebene Auflagefläche zu schaffen. Diese ist dann von vornherein gegeben, wenn, wie im Beispiel der Fig. 3, die Behälterwand 1' selbst eben ausgebildet ist. Das Ausführungsbeispiel der Fig. 3 zeigt die Möglichkeit eines Toleranzausgleichs; deshalb ist der Durchmesser der Wandöffnung 4' wesentlich größer als der Durchmesser des hindurchzuführenden Rohres. Die Wand 1' ist wiederum mit einer die Wandöffnung 4' umgebenden Ausnehmung 6' versehen, in die ein Dichtring 7' eingelegt ist. Gegen diesen Dichtring 7' drückt in diesem Fall ein Zwischenring 14, der mit Langlöchern 15 oder entsprechend großen Bohrungen versehen ist, so daß er gegenüber der Achse der Wandöffnung 4' und gegenüber den in die Wand 1' einbetonierten Gewindehülsen 12' in radialer Richtung verschoben, bei Bohrungen auch verdreht werden kann.

An seinem inneren Rand ist der Zwischenring 14 seinerseits wieder mit einer Ausnehmung 16 versehen, in die ein weiterer Dichtring 17 einlegbar ist, der nun im Einbauzustand an der Außenfläche 8 des Rohres 5 anliegt. Dieser Dichtring 17 ist durch einen losen Flansch 9' zusammendrückbar, der mittels Schraubenbolzen 18, die in den Zwischenring 14 eingeschraubt werden können, gegen diesen geführt werden kann.

Am Beispiel der Fig. 3 ist erkennbar, wie die innere Umfangsfläche des Zwischenrings 14 gegen die Wand 1' hin und die innere Umfangsfläche des losen Flansches 9' nach außen hin abgeschrägt sind, um dem Rohr 5 eine Verschwenkbarkeit gegenüber der Dichtung zu ermöglichen.

**Patentansprüche**

1. Vorgefertigtes behälterförmiges oder zur Bildung eines Behälters dienendes Bauteil aus Beton oder Stahlbeton mit mindestens einer Öffnung in einer Außenwand, durch die ein Rohr dichtend hindurchführbar ist, und mit einer Dichtung aus einem zwischen einer Oberfläche der Wand und einem losen Flansch zusammendrückbar angeordneten, im Einbauzustand am Rohr anliegenden Dichtring aus einem elastischen Material, wie Gummi, Kunststoff oder dergleichen, dadurch gekennzeichnet, daß in der Wandoberfläche eine die Wandöffnung (4) umgebende und zu dieser hin geöffnete Ausnehmung (6) zur teilweisen Aufnahme des Dichtrings (7) vorgesehen ist, deren Kontur der Kontur des Dichtringes im Bereich seiner Aufnahme entspricht.

2. Bauteil nach Anspruch 1, dadurch gekennzeichnet, daß der Dichtring (7) kreisförmigen Querschnitt aufweist und daß die Tiefe (h) der etwa kreissektorförmigen Ausnehmung (6) größer als dessen Radius, aber kleiner als dessen Durchmesser ist.

3. Bauteil nach Anspruch 1 oder 2, dadurch gekennzeichnet, daß zwischen der Wandoberfläche des Bauteils und dem losen Flansch (9') ein Zwischenring (14) angeordnet ist, der gegen einen in eine Ausnehmung (6') am Bauteil eingelegten Dichtring (7') wirkt und der seinerseits eine entsprechende Ausnehmung (16) besitzt, in die ein im Einbauzustand am Rohr (5) anliegender und durch den losen Flansch (9') zusammendrückbarer Dichtring (17) einlegbar ist.

4. Bauteil nach einem der Ansprüche 1 bis 3, dadurch gekennzeichnet, daß die Wandöffnung (4, 4') von der Ausnehmung (6, 6') an sich konisch erweiternd ausgebildet ist.

**Claims**

1. Prefabricated concrete or reinforced concrete structural part, which is in the shape of a container or serves to form a container and comprises at least one opening in an outer wall, through which a pipe can be passed with a tight fit, and a seal formed by a washer, which is arranged such that it can be compressed between a surface of the wall and a loose flange, bears against the pipe when fitted and consists of an elastic material, such as rubber, plastic or similar, characterised in that a recess (6), which surrounds the wall opening (4) and is open towards the latter, is provided in the wall surface to partly hold the washer (7), the contour of which recess corresponds to the contour of the washer in the area in which it is held.

2. Structural part according to claim 1, characterised in that the washer (7) has a circular cross section and that the depth (h) of the recess (6), which is approximately in the form of a circular sector, is greater than the radius, yet smaller than the diameter of the washer.

3. Structural part according to claim 1 or 2, characterised in that an intermediate ring (14) is arranged between the wall surface of the structural part and the loose flange (9'), which ring acts against a washer (7'), which is placed in a recess (6') in the structural part, and itself comprises a corresponding recess (16), in which a washer (17), which bears against the pipe (5) when fitted and can be compressed by the loose flange (9'), can be placed.

4. Structural part according to on of claims 1 to 3, characterised in that the wall opening (4, 4') widens in a conical manner from the recess (6, 6').

**Revendications**

1. Elément de construction préfabriqué en béton ou béton armé, en forme de récipient ou servant à la réalisation d'un récipient, comportant dans une paroi extérieure au moins une ouverture permettant le passage d'un tuyau en assurant l'étanchéité et un dispositif d'étanchéité constitué d'un anneau d'étanchéité en matière élastique telle que caoutchouc, matière plastique ou matière similaire, disposé de façon compressible, entre une surface de la paroi et une bride libre et plaqué en position montée contre le tuyau, caractérisé en ce qu'un évidement (6) est prévu dans la surface de la paroi, autour de l'ouverture (4) dans la paroi et débouchant sur elle, destiné à recevoir partiellement l'anneau d'étanchéité (7) et possédant un contour correspondant au contour que présente l'anneau d'étanchéité au niveau de sa partie à insérer.

2. Elément de construction suivant la revendication 1, caractérisé en ce que l'anneau d'étanchéité présente une section circulaire et que la profondeur (h) de l'évidement (6) approximativement en forme de secteur de cercle est supérieure au rayon mais inférieure au diamètre de l'anneau.

3. Elément de construction suivant la revendication 1 ou 2, caractérisé en ce qu'une bague intermédiaire (14) est disposée entre la surface de la paroi de l'élément de construction et la bride libre (9'), la bague exerçant un effort vis-à-vis d'un anneau d'étanchéité (7') inséré dans un évidement (6') dans l'élément de construction, la bague possédant également un évidement (16) correspondant dans lequel peut venir s'insérer un anneau d'étanchéité (17) plaqué en position montée contre le tuyau (5) et pouvant être comprimé par la bride libre (9').

4. Elément de construction suivant une quelconque des revendications 1 à 3, caractérisé en ce que l'ouverture (4, 4') dans la paroi est conformée avec un élargissement conique partant de l'évidement (6, 6').

EP 0 259 765 B1

FIG.1

FIG.2

FIG.3